# EUROPEAN PATENT SPECIFICATION

(11) **EP 3 974 212 B1**
(45) Date of publication and mention of the grant of the patent: **28.10.2026**
(21) Application number: 21199115.3
(22) Date of filing: 27.09.2021
(51) Int. Cl.: B60C 19/12, C08J 7/12, C08K 3/013, C08K 5/14, C08L 23/22, B29C 73/16, B29D 30/06, B60C 1/00, B60C 5/14, C08K 3/22, C08K 3/36, C08K 5/00

(54) **SEALANT COMPOSITION AND SELF SEALING TIRE**
DICHTUNGSZUSAMMENSETZUNG UND SELBSTDICHTENDER REIFEN
COMPOSITION D'AGENT D'ÉTANCHÉITÉ ET PNEU AUTO-OBTURANT

(30) Priority: 29.09.2020 US 202063084898 P; 07.09.2021 US 202117468049
(43) Date of publication of application: 30.03.2022
(73) Proprietor: The Goodyear Tire & Rubber Company, Akron, OH 44316 (US)
(72) Inventor: PAPAKONSTANTOPOULOS, George Jim, Medina, 44256 (US); GERSMAN, Michael Lawrence, Cleveland, 44102 (US); FEHER, Frank James, Copley, 44321 (US); RODEWALD, Stephan, Dubuque, 52003 (US)
(74) Representative: Leslie, Edward

(56) References cited:
- EP-A1- 0 135 463
- EP-A1- 2 039 500
- EP-A1- 2 045 103
- EP-A1- 3 572 218
- EP-B1- 1 435 301
- GB-A- 2 082 191
- JP-A- 2003 055 528
- US-A- 4 140 167
- US-A1- 2006 229 402

## Description

### Field of the Invention

This invention relates to a pneumatic tire of the tubeless type with puncture sealing properties, a puncture sealing composition for use in such tires, and a method for manufacturing such tires.

### Background of the Invention

Historically, puncture sealing tires have been designed in such a way so as to retard or prevent the loss of air and consequential deflation of the tire after being punctured with a sharp object, such as a nail. Pneumatic tires with puncture sealing capabilities have been described in the literature since at least the first part of the twentieth century (see United States Patent 1,419,470, United States Patent 1,601,013, and United States Patent 1,977,281). Such early self-sealing tires were of a relatively simple design that generally included an unvulcanized layer of rubber which would theoretically flow into the puncture and seal it so as to prevent air loss. However, in actual practice such self-sealing tires were not very effective and consequently were of limited value.

Over the years better puncture sealing tires have been developed which allow for the tire to provide longer service after being punctured. In many cases, this provides for the continued use of the tire until it can be driven to a more convenient location for it to be repaired or replaced. For instance, it would be highly desirable if the vehicle on which the tire is installed could be driven to a garage or a tire service center for repair rather than being required to change the tire on a busy road, under inclement weather conditions, or in a less than desirable neighborhood. In any case, more and more sophisticated tire constructions, sealant compositions and methods for manufacturing self-sealing tires have been developed. In most of these designs a sealant material is encased or encapsulated in between layers of the tire. For example, United States Patent 2,877,819 discloses a unitary tubeless pneumatic tire, comprising a hollow casing of fabric reinforced vulcanized, rubber-like elastic material and including a circumferential tread portion of substantial width and opposite sidewalls extending radially inwardly therefrom, and an annular puncture-sealing body of substantial width on the inner periphery of said casing in laterally centered relation with respect to said tread portion and sidewalls, said body including radially inner and outer walls of rubber-like material integrally connected at laterally spaced peripheral side portions of the body and said outer wall being integrally connected at laterally spaced peripheral side portions of the body and said outer wall being integrally cured to the elastic material of said fabric reinforced casing, said body having web portions integrally connecting between said inner and outer walls thereof defining a plurality of separate calls completely around the body, and said cells containing puncture-sealing material, said web portions being uniformly relatively thin, whereby said cellular body between said inner and outer walls thereof is predominantly puncture sealing material so that a puncturing object penetrating the tread portion of said casing and said body at substantially any point must pass through sufficient said puncture sealing material to seal against escape of inflation air through the puncture made by the puncturing object.

United States Patent 3,048,509 discloses a laminated puncture sealing strip for pneumatic tires comprising a plurality of superposed sealing sheets that are not more than one-tenth inch or less than one-twentieth inch in thickness and that are composed of a soft sticky unvulcanized synthetic rubber sealing composition comprising a copolymer of 1,3-butadiene and styrene which contains at least 50% by weight of the diene combined with 35 to 115 parts by weight of softening and tackifying agents per 100 parts of the copolymer and with from 35 to 65 parts by weight of a pigment per 100 parts of the copolymer, said softening and tackifying agents and pigments being so proportioned that said sealing composition has a plasticity of from 20 to 35 as measured on a Neodoptifa-Hoekstra plastometer, and means for restricting flow of the sealing composition and for protecting the same against deterioration comprising separating and covering sheets alternating with the sealing sheets, said separating and covering sheets being thinner than said sealing sheets and being composed mainly of a vulcanized rubber compound the principal rubbery component of which is selected from the group consisting of a polymer of chloroprene and styrene-butadiene rubbers than contain at least 50% by weight of the diene, said rubber compound being substantially free from sulfur and migratory curing agents.

United States Patent 4,089,360 discloses a pneumatic tire having a laminate as an abrasion gum strip or an innerliner wherein said laminate is comprised of at least two groups of layers with each group having at least one layer and each layer of said laminate comprising a rubber compound having an unsaturated, amorphous polymer selected from the group consisting of natural rubber and synthetic rubber and each layer having sulfur and sulfur cure accelerators so that said layers will vulcanize when exposed to a subsequent vulcanization treatment, said laminate manufactured by the steps comprising providing at least one layer of a first group with a component selected from the group consisting of paradichlorobenzene and the thioetherpolythiols; providing at least one layer of a second group with components selected from the group consisting of 2,6-di-t-butyl-p-cresol; phenyl beta-naphthylamine; 4,4' thiobis (6-t-butyl-m-cresol); N-(1,3-dimethylbutyl) N' phenyl-p-phenylene diamine; syn-dibetanaphthyl-p-phenylene diamine; and aromatic oils; said components yielding different degrees of cross-linkage in said layers when said layers are subjected to irradiation; assembling at least one of said layers from each said group into contiguous relationship to form a laminate; subjecting said laminate to irradiation so that at least two of said layers are cross-linked to a different degree; assembling said laminate into said tire and vulcanizing said tire.

United States Patent 4,140,167 discloses a pneumatic tire comprising as one of its rubber elements a laminate comprising at least five layers of rubber compounds produced by providing at least two outer layers with a desensitizing agent which retards cross-linkage when subjected to irradiation, providing two inner layers of said laminate with a sensitizing agent which promotes cross-linkage when subject to irradiation, providing a middle layer located between said sensitized layers with a material which degrades when exposed to irradiation, assembling said laminate with said middle layer located between the two sensitized layers and the one of said desensitized layers located outside of each of said sensitized layers, subjecting said laminate to irradiation so that said layers are differentially cross-linked with said sensitized layers being cross-linked to a greater degree than said desensitized layers and said middle layer being degraded to yield a soft product, assembling said laminate into said tire and vulcanizing said tire. The degraded polymeric material utilized in such tires can be polyisobutylene, copolymers containing polyisobutylene, or polyethylene oxide, and the cross-linked polymeric material can be natural rubber, copolymers of butadiene and styrene and halogenated butyl rubber.

United States Patent 4,228,839 discloses a self-sealing pneumatic tire comprising an annular road-engaging tread surface, two sidewalls each connecting a side of said tread surface to an annular bead, reinforcing body plies extending from one bead to the other through the sidewalls and tread and a puncture-sealant layer located in the crown area of said tire radially inward of said reinforcing body plies, said puncture-sealant layer comprising a blend of a first polymeric material that degrades on exposure to irradiation and a second polymeric material that crosslinks on exposure to irradiation, vulcanization temperatures or both to form an elastic matrix for said first polymeric material, said tire manufactured by the steps comprising providing a layer comprised of blended rubber compound with said blend of said first and second polymeric materials, assembling said layer into an unvulcanized tire as its innermost layer in the crown area, vulcanizing said tire, and subsequently irradiating said tire to degrade said first polymeric material whereby said first polymeric material forms a tacky material in said second crosslinked polymeric material which acts as an elastic matrix for said first polymeric material, whereby said layer with said polymeric material combination has puncture sealing properties. In these tires, the first polymeric material can be polyisobutylene or a copolymer of polyisobutylene and the second polymeric material can be a halogenated butyl rubber, an ethylene propylene terpolymer, polybutadiene rubber, a copolymer of styrene and butadiene, a block copolymer, a butadiene acrylonitrile copolymer, natural rubber, polyisoprene, or neoprene.

United States Patent 4,426,468 describes a self-sealing composition for a tire based on crosslinked butyl rubber having a very high molecular weight. United States Patent 4,426,468 more specifically describes a butyl rubber based sealant composition, the butyl rubber constituent of which is present only in the form of a copolymer having a weight average molecular weight in excess of 100,000, comprising the reaction product of said butyl rubber, a curing system including a cross-linking agent selected from the group consisting of at least 2 parts by weight of a quinoid cross-linking agent per hundred parts butyl rubber and at least 5 parts by weight of a phenolic cross-linking agent per hundred parts butyl rubber, and at least one tackifier compatible with butyl rubber, and a filler material, the composition being compounded such that it has a tensile strength of at least 0.207 MPA (30 psi), an elongation of at least 600% and a cross-link density such that its swell ratio in toluene is between 12 and 40. However, butyl rubbers have the drawback of exhibiting a high level of hysteresis over a broad temperature range which increased the rolling resistance of tires and is detrimental of fuel economy.

As an alternative to butyl rubbers self-sealing compositions for tires can also be made using unsaturated diene elastomers, including natural rubber. Such compositions are described in United States Patent 4,913,209, United States Patent 5,085,942, and United States Patent 5,295,525. These compositions are characterized by the combined presence of a high content of hydrocarbon resin as tackifier, always greater than 100 parts by weight per hundred parts. In addition, a large amount of liquid elastomer gives a high fluidity to the composition which is a source of other drawbacks, in particular a risk of the self-sealing composition flowing during use at relatively high temperature (typically above 60°C) frequently encountered during the use of the tires in certain geographical regions.

United States Patent 6,837,287 describes a method of manufacturing a pneumatic rubber tire having an outer circumferential tread, a supporting carcass therefore, and an inner liner disposed inwardly from said supporting carcass, containing a puncture sealant layer positioned between said inner liner and said carcass, the steps of which comprise, based upon parts by weight per 100 parts by weight uncured butyl rubber (phr): (A) providing a butyl rubber-based rubber composition comprised of: (1) 100 phr of uncured star branched butyl rubber, (2) 1 to 35 phr of a particulate precured rubber, selected from resin-cured butyl rubber and/or sulfur-cured diene-based rubber, homogeneously dispersed in said uncured butyl rubber, and (3) 1 to 16 phr of organoperoxide; (B) assembling said butyl rubber based rubber composition as a layer into an unvulcanized rubber tire between said carcass and said innerliner during the tire building process; and (C) shaping and curing said rubber tire at a temperature in a range of 130°C to 170°C for a sufficient period time to partially depolymerize said uncured butyl rubber in said butyl rubber-based rubber composition layer, wherein said particulate precured rubber substantially remains in its precured condition as a particulate dispersion within said partially depolymerized butyl rubber.

United States Patent 8,221,849 discloses a method of producing a self-sealing pneumatic tire comprising the steps of: injecting a viscous sealant material onto an internal surface of a vulcanization molded pneumatic tire; rotating the pneumatic tire around a tire axis while forming the sealant material into a sealant layer diffused in a sheet form by centrifugal force, injecting a cover material comprising an unhardened rubber-based material or a resin-based material onto the internal surface of the sealant layer; rotating the pneumatic tire around the tire axis while forming the cover material into a cover sheet layer diffused in a sheet form by centrifugal force; and hardening the cover sheet layer by irradiating with an electron beam, infrared rays, ultraviolet rays, or ultrasonic waves.

United States Patent 8,360,122 describes a tire sealant material composition comprising at least one non-halogenated butyl rubber, and 2,2'-dibenzamido-diphenyldisulfide, the sealant material composition having a viscosity that permits the sealant material composition to be incorporated into a tire during a tire building process and to degrade to a lower viscosity that permits the resulting degraded sealant material composition to flow into and seal a puncture in a tire.

United States Patent 9,427,918 discloses a color sealant composition for a tire, comprising: 100 parts by weight of a raw rubber, 10 to 60 parts by weight of surface modified silica prepared by placing silica at 300°C to 500°C for 30 minutes to 3 hours, 0.05 to 5 parts by weight of pigment, 40 to 100 parts by weight of polybutene having a number average molecular weight of 1,000 to 1,500, 60 to 300 parts by weight of polybutene having a number average molecular weight of 2,000 to 3,000, and 5 to 15 parts by weight of peroxide. The raw rubber in this tire sealant composition can be natural rubber, butyl rubber, or a blend of natural rubber and butyl rubber.

United States Patent 9,677,025 describes an inflatable article comprising a puncture-resistant layer, said layer comprising an elastomer composition having a self-sealing property, wherein the composition comprises: a blend of at least two solid elastomers, a polybutadiene or butadiene copolymer elastomer, referred to as "elastomer A", and a natural rubber or synthetic polyisoprene elastomer, referred to as "elastomer B", the elastomer A: elastomer B ratio by weight being within a range from 10:90 to 90:10; between 30 phr and 90 phr of a hydrocarbon resin; and from 0 to less than 30 phr of filler.

United States Patent 9,802,446 discloses a pneumatic vehicle tire comprising a tread, an inner layer, and a tire sealant disposed upon the inner layer and opposite the tread; wherein the tire sealant comprises expanded solids comprising expandable graphene structures and microspheres; wherein the expanded solids are incorporated into the tire sealant in an amount of from 1 weight percent to 20 weight percent and, wherein the tire sealant provides sealing by flowing into a defect site penetrating the tread and the inner layer.

United States Patent 10,730,255 describes a method of applying a rubber-based self-sealing composition on an inner surface of a tire casing, comprising the steps of: introducing a non-crosslinked self-sealing composition into an inlet of an extrusion device; adjusting speed and temperature conditions of the extrusion device so that, at an application nozzle forming an outlet die of said extrusion device, the self-sealing composition is crosslinked, and bringing the application nozzle close to the inner surface of said casing previously set in relative motion with respect to the application nozzle, and depositing an extruded and crosslinked bead having a given width and profile directly on said internal surface of the casing; wherein the extrusion device includes an assembly comprising a screw rotated in a barrel, the extrusion device further including a duct positioning downstream of the assembly that opens into the application nozzle; wherein the extrusion device includes a plurality of zones, and the method further includes increasing the temperature of the composition in a first zone to a set point temperature between 140°C and 220°C during a first period of time, maintaining the temperature at the set point temperature in a second zone for a second period of time, and increasing the temperature in a third zone for a third period of time, wherein the third period of time is shorter relative to the second period of time; wherein the third zone includes the duct and the application nozzle.

Many additional methods, sealants and tire constructions have been suggested for puncture sealant pneumatic tires. However, all of these ideas have had certain drawbacks. For example, the use of fluid puncture sealant coatings which seal by flowing into the puncture hole are frequently unsuccessful primarily because sealant coatings may flow excessively and thus tend to cause the tire to become out of balance. In other cases, the sealant coating is not operable or effective over a wide temperature range extending from hot summer to cold winter conditions. Central cores of cellular material which will physically maintain the shape of the tire when punctured can place a restriction on the maximum speed of a vehicle on which they are used because of potential breakdown or destruction of the cells caused by the effects of heat and distortion. More complicated structures wherein the sealant material is encased in a vulcanized material are usually expensive to manufacture and can also create balance and suspension problems due to the additional weight required in the tire.

Puncture sealing tires can be built wherein a layer of degraded rubber which is tacky or gummy (of low viscosity) is assembled into the unvulcanized tire. This method of construction is usually only reasonably possible when the degraded layer of rubber is laminated with another undegraded layer which permits its handling during the tire building procedure. This is because the tacky, sticky nature and lack of strength in degraded rubber make it very difficult to handle alone without additional support and a barrier to keep it from sticking to a tire building machine or curing apparatus. By laminating the degraded rubber layer between two or more undegraded rubber layers it is capable of retaining its structural integrity during the tire building and vulcanization process wherein high pressures are applied to the tire which would displace the degraded rubber layer from its desired location if not laminated. Such a lamination procedure adds greatly to the cost of building a tire. Thus, such lamination procedures have not been widely accepted on a commercial basis for building puncture sealing pneumatic tires.

The most common commercial approach used in manufacturing self-sealing tires is to build a layer of degradable material which can be easily handled into the tire. This layer of degradable material is sandwiched between other layers of the tire. In many cases it will be positioned between two layers of innerliner or between the innerliner and the supporting carcass of the tire. In any case, this degradable material breaks down at the elevated temperatures which are employed during the vulcanization of the tire into a low viscosity, tacky material. This approach greatly facilitates the tire building procedure by eliminating the need to handle such a sticky material when the tire is being built.

There is a continuing desire for high quality pneumatic tires having an effective puncture sealing feature and for simple, low cost methods for manufacturing such tires on a commercial basis. However, challenges still remain in the field of manufacturing highly effective self-sealing tires without compromising tire uniformity and performance characteristics. For, instance, during vulcanization as the sealant material is degraded into a low viscosity material having the needed characteristics for a sealant, off-gassing results. This off-gassing frequently results in an undesirable expansion of the innerliner in cases where the sealant layer is situated between the innerliner and the supporting carcass or between two layers of innerliner. This expansion of the innerliner causes it to bubble which in turn results in poor tire uniformity and balance issues.

EP 1 435 301 B1 describes a sealant composition in accordance with the preamble of claim 1.

Further sealant compositions are known from GB 2 082 191 A, EP 3 572 218 A1, US 4,140,167 A, EP 2 039 500 A1, EP 2 045 103 A1, EP 0 135 463 A1, US 2006/229402 A1 and JP 2003 055528 A

### Summary of the Invention

The invention relates to a sealant composition in accordance with claim 1, to a tire in accordance with claim 12, and to a method in accordance with claim 13.

Dependent claims refer to preferred embodiments of the invention.

The method of this invention provides a simple and inexpensive method for manufacturing self-sealing pneumatic rubber tires of the tubeless type having a high degree of uniformity. In the tire building method of this invention, a layer of polyisobutylene rubber containing at least one peroxide is assembled into an unvulcanized tire. In effect, the polyisobutylene rubber is partially degraded to form a tacky low viscosity material which has puncture sealing properties. In the method of this invention, a solid polyisobutylene composition is assembled into the unvulcanized rubber tire and the tire is vulcanized using conventional methods which converts the solid polyisobutylene rubber composition into a sealant layer. The peroxide utilized in the polyisobutylene rubber formulation is preferably employed at as low of a level as possible to reduce the level of gas formation (off-gassing).

This invention more specifically discloses a sealant composition which is particularly useful in manufacturing self-sealing tires and which comprises (a) polyisobutylene, (b) a peroxide, and (c) a filler or a reinforcing filler, wherein the polyisobutylene is present in the sealant layer at a level of at least 50 weight percent polyisobutylene, based upon the total weight of elastomers in the sealant composition or layer, and wherein the filler includes polypropylene.

The subject invention further reveals an uncured pneumatic tire which comprises a generally toroidal-shaped carcass with an outer circumferential tread, two spaced beads, at least one ply extending from bead to bead, sidewalls extending radially from and connecting said tread to said beads, a sealant layer which is disposed inwardly from the supporting carcass, and an innerliner which is disposed inwardly from the sealant layer, wherein said circumferential tread is adapted to be ground-contacting, and wherein the sealant layer comprises (a) polyisobutylene, (b) a peroxide, and (c) a filler or reinforcing filler, wherein the polyisobutylene is present in the sealant layer at a level of at least 50 weight percent, based upon the total weight of elastomers in the sealant layer, and wherein the filler includes polypropylene.

The present invention also discloses a method of manufacturing a pneumatic rubber tire having a puncture sealing feature which comprises: (1) building an unvulcanized tire comprising a circumferential rubber tread, a supporting carcass therefor, two spaced beads, two rubber sidewalls connecting said beads, an inner liner and a solid sealant formulation layer disposed inwardly from said supporting carcass and outwardly from said inner liner wherein said solid sealant layer formulation comprises (a) polyisobutylene, (b) a peroxide, and (c) a filler or reinforcing filler, wherein the polyisobutylene is present in the sealant layer at a level of at least 50 weight percent, based upon the total weight of elastomers in the sealant layer and wherein the filler includes polypropylene, and (2) shaping and vulcanizing said tire in a tire mold under conditions of heat and pressure and simultaneously forming in situ a puncture sealant layer in said tire by both crosslinking and partially depolymerizing said polyisobutylene rubber in said sealant layer formulation.

One embodiment of this invention relates to a sealant composition comprising (a) a polyisobutylene rubber and/or a butyl rubber, (b) a peroxide, and (c) a reinforcing filler, wherein the peroxide has an active oxygen content of at least 6% and which is preferably greater than 7%, and wherein the filler includes polypropylene.

Another embodiment of this invention reveals a sealant composition comprising (a) a polyisobutylene rubber and/or a butyl rubber, (b) a peroxide, and (c) polypropylene. It is typically preferred for the polypropylene to be a relatively low molecular weight polypropylene which has a weight average molecular weight which is within the range of 4,000 to 40,000.

The glass transition temperature (Tg) for polymers is determined as a peak midpoint by a differential scanning calorimeter (DSC) at a temperature rate of increase of 10°C per minute, according to ASTM D7426 or equivalent.

Molecular weight refers to the true molecular weight in g/mol of a polymer (copolymer or block of a copolymer). Mn (number average molecular weight), Mw (weight average molecular weight) and Mz (z average molecular weight) can be suitably determined together using gel permeation chromatography (GPC) according to ASTM 5296-11 using polystyrene calibration standards (for further explanations, please see ASTM 5296-11 and/or Saviour A. Umoren and Moses M. Solomon, Polymer Characterization: Polymer Molecular Weight Distribution, March 2016, in Polymer Science, pages 412-419, in particular and sections 2 and 3.3.1). Polydispersity index or polydispersity is the ratio of Mw/Mn, i. e. the ratio of the weight average molecular weight to the number average molecular weight. Gel permeation chromatography (GPC) is a well-known method wherein polymers are separated according to molecular size, the largest molecule eluting first. The chromatograph is calibrated using commercially available polystyrene molecular weight standards. The detector used is an ultraviolet detector. The fraction of chains existing as mono chains is determined as the ratio of the areas under the GPC curve, i.e., (mono chain peak area)/(total area).

### Brief Description of the Drawings

The present invention is further illustrated by the accompanying drawings. These drawings represent two preferred embodiments of the present invention.
FIG. 1 is a cross-sectional view of a tire of this invention wherein the sealant layer is sandwiched between the innerliner and carcass of the tire.
FIG. 2 is a cross-sectional view of a pneumatic rubber tire of this invention wherein the self-sealant layer of the tire is located between two layers of innerliner in the tire.

### Detailed Description of Example Embodiments of the Invention

In the method of this invention a solid sealant layer formulation is assembled into an unvulcanized rubber tire using conventional tire building techniques. The solid sealant layer formulation is relatively easy to build into the tire because it is in the form of a solid which is not excessively sticky or tacky. The physical nature of the solid sealant layer formulation is such that its viscosity is high enough to permit easy handling during the construction (building) of the unvulcanized tire and during the vulcanization (curing) operation. In other words, the solid sealant layer formulation has enough uncured strength (modulus) to retain its shape during building, enough tack to stick to adjacent layers during building and enough strength to retain its shape during the application of the high pressure during vulcanization. However, it also is not too tacky and does not stick to undesired materials, such as the building drum.

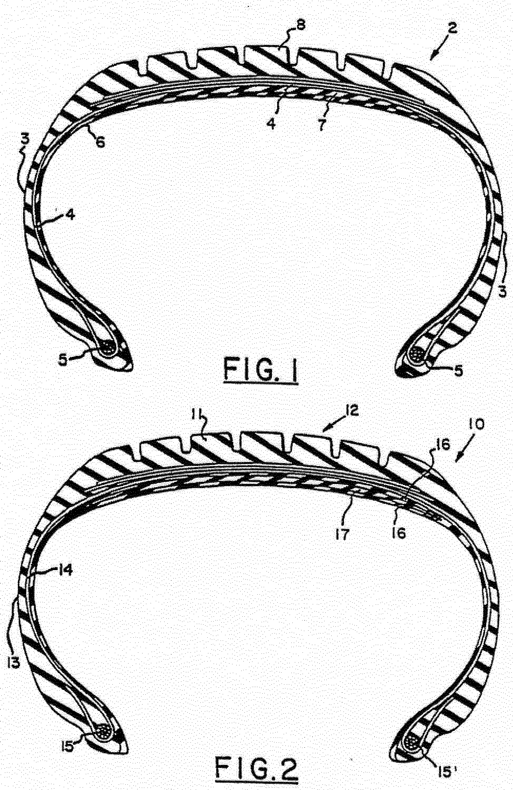

The solid sealant layer formulation is assembled into the uncured tire inwardly from the tire supporting carcass of the tire. In most cases it will be built into the tire between the supporting carcass and the innerliner of the tire as is illustrated in Figure 1. The innerliner is an air barrier layer that serves to keep air or another gas, such as nitrogen, which is used to inflate the tire for escaping through the tire structure by diffusion. The innerliner typically comprises a halobutyl rubber or some other suitable material having a high degree of resistance to gas permeation. In another embodiment of this invention the solid sealant layer formulation is built into the tire between two layers of innerliner as is illustrated in Figure 2. In other words, it is sandwiched between two or more layers of innerliner or between one or more innerliner layers and the tire carcass.

After an unvulcanized tire is built so as to include a layer of the solid sealant formulation it is vulcanized utilizing conventional techniques. After the unvulcanized pneumatic rubber tires of this invention are assembled they are vulcanized using a normal tire cure cycle. In the practice of this invention, the unvulcanized tires can be cured over a wide temperature range, such as a temperature which is within the range of 100°C to 200°C. However, it is generally preferred for the tires of this invention to be cured at a temperature ranging from 130°C to 170°C. It is typically more preferred for the tires of this invention to reach a maximum temperature ranging from a 140°C to 165°C during vulcanization. For instance, it is typically optimal for the tire to reach a maximum curing temperature which is within the range of 160°C to 165°C. It is generally preferable for the cure cycle used to vulcanize the uncured tires to have a duration which is within the range of 8 minutes to 60 minutes. In the practice of this invention the uncured tires with normally be cured for a period which is within the range of 10 minutes to 25 minutes with the cure period preferably being from 10 minutes to 17 minutes, and most preferably being within the range of 11 minutes to 13 minutes. Any standard vulcanization process can be used such as heating in a press or mold and/or heating with superheated steam or hot air. In any case, the uncured tire can be built, shaped, molded and cured by various methods which are known and which are readily apparent to those having ordinary skill in the art.

During the vulcanization of the tire, the polyisobutylene in the solid sealant formulation will partially depolymerize at the elevated vulcanization temperature to produce a highly effective puncture-sealant composition. Thus, the solid sealant layer formulation is transformed *in situ* into a puncture sealant layer during the curing of the tire. This puncture-sealant composition has a relatively low viscosity which allows it to flow into punctures so as to seal them thereby stopping or hindering the escape of the gas used to inflate the tire.

Tires made in accordance with this invention are depicted in FIG. 1 and FIG. 2. In FIG. 1 a self-sealing pneumatic rubber tire 2 of this invention is shown wherein the tire has sidewalls 3, a supporting carcass 4, inextensible beads 5, an innerliner (air barrier layer) 6, a sealant layer 7, and an outer circumferential tread (tread portion) 8. The individual sidewalls 3 extend radially inward from the axial outer edges of the tread portion 8 to join the respective inextensible beads 5. The supporting carcass 4 acts as a supporting structure for the tread portion 8 and sidewalls 3. The sealant layer 7 is disposed inwardly from said supporting carcass 4 and outwardly from said innerliner 6. The outer circumferential tread 8 is adapted to be ground contacting when the tire is in use. In this embodiment of the invention, the innerliner 6 is disposed inwardly from said supporting carcass 4.

In FIG. 2 a self-sealant pneumatic rubber tire 10 of another embodiment of this invention is depicted. This pneumatic tire of the tubeless type includes a tread portion 11, a crown area 12, sidewalls 13, a supporting carcass 14, inextensible beads 15, 15', an innerliner 16, and sealant layer 17. In this embodiment of the present invention the sealant layer 17 is sandwiched between two layers of innerliner 16. This, sealant layer 17 is disposed inwardly from one layer of innerliner and outwardly from another layer of innerliner. Both layers of innerliner 16 and the sealant layer 17 are disposed inwardly from the supporting carcass 14.

The solid sealant layer formulation used in the practice of this invention comprises (a) polyisobutylene, (b) a peroxide, and (c) a reinforcing filler, wherein the polyisobutylene is present in the sealant layer at a level of at least 50 weight percent, based upon the total weight of elastomers in the sealant formulation, and wherein the filler includes polypropylene.

Preferably, the polyisobutylene represents at least 75 weight percent, at least 90 weight percent, at least 94 weight percent, at least 96 weight percent, at least 98 weight percent, or at least 99 weight percent, of the total weight of elastomers in the sealant formulation. In fact, the sealant layer formulation can be void of other elastomers.

The solid sealant layer formulation will preferably contain less than 50 weight percent butyl rubber, will typically contain less than 40 weight percent butyl rubber, will normally contain less than 20 weight percent butyl rubber, will more preferably contain less than 10 percent butyl rubber, will even more preferably contain less than 5 percent butyl rubber, and will most preferably contain less than 1 weight percent butyl rubber. The solid sealant layer formulation will typically be void of butyl rubber, halogenated butyl rubbers, natural rubber, synthetic polyisoprene rubber, emulsion styrene-butadiene rubber, solution styrene-butadiene rubber, isoprene-butadiene rubber, styrene-isoprene-butadiene rubber, styrene/butadiene diblock polymers, styrene/butadiene/styrene triblock polymers, neoprene, nitrile rubber, ethylene-propylene rubbers, and ethylene-propylene-diene monomer rubbers.

The polyisobutylene rubber (PIB) utilized in the practice of this invention is preferably a relatively high molecular weight homopolymer of isobutylene. It will typically have a weight average molecular weight which is within the range of 100,000 to 800,000, it will more typically have a weight average molecular weight which is within the range of 250,000 to 600,000, it will preferably have a weight average molecular weight which is with the range of 300,000 to 550,000, and it will more preferably have a weight average molecular weight which is within the range of 300,000 to 450,000.

The polyisobutylene rubber will normally have a polydispersity (Mw/Mn) which is within the range of 2.0 to 2.8, and a glass transition temperature which is within the range of -60°C to -68°C.

The polyisobutylene rubber will also typically have a weight average molecular weight which is within the range of 300,000 to 600,000, a polydispersity (Mw/Mn) which is within the range of 2.1 to 2.7, and a glass transition temperature which is within the range of -61°C to - 67°C.

The polyisobutylene rubber will preferably have a weight average molecular weight which is within the range of 350,000 to 550,000, a polydispersity (Mw/Mn) which is within the range of 2.2 to 2.6, and a glass transition temperature which is within the range of -62°C to - 66°C.

The polyisobutylene rubber will more preferably have a weight average molecular weight which is within the range of 400,000 to 450,000, a polydispersity (Mw/Mn) which is within the range of 2.3 to 2.5, and a glass transition temperature which is within the range of - 63°C to -65°C. The polyisobutylene rubber will most preferably have a weight average molecular weight which is within the range of 375,000 to 500,000, a polydispersity (Mw/Mn) of about 2.4, and a glass transition temperature of about -64°C.

The polyisobutylene rubber can optionally be stabilized with a small amount of an antioxidant, such as from 100 ppm to 1,000 ppm of an antioxidant. Such antioxidants will typically be incorporated into the polyisobutylene rubber at a level of 300 ppm to 700 ppm. A wide variety of antioxidants can be employed with butylated hydroxytoluene (BHT) typically being used.

The peroxide compounds utilized in the practice of this invention are those generally used for the crosslinkage of rubbery polymers. Preferably, peroxide compounds which disintegrate only at high temperatures, above 100°C are utilized. Some representative examples of such peroxides include tert-butyl perbenzoate and dialkyl peroxides with the same or different radicals, such as dialkylbenzene peroxides and alkyl peresters. Preferably the peroxide vulcanizing agent employed will contain two peroxide groups. Frequently the peroxide groups are attached to a tertiary-butyl group. The basic moiety on which the two peroxide groups are suspended can be aliphatic, cycloaliphatic, or aromatic radicals. Some representative examples of such peroxide include: bis(α,α-dimethylbenzyl) peroxide (more commonly known as dicumyl peroxide); 2,5-bis(t-butyl peroxy)-2,5-dimethyl hexane; 1,1-di-t-butyl peroxy-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxy)-butane; di-t-butyl peroxide; benzyl peroxide; 2,5-bis(t-butyl peroxy)-2,5-dimethyl hexane; and 2,5-dimethyl-2,5-di(t-butyl peroxy) hexane. Such peroxide vulcanizing agents can be added to the polymer composition layer in pure form (100 percent active peroxide), but are typically employed on an inert, free-flowing mineral carrier or an oil, such as silicon oil. Calcium carbonate is an inert mineral carrier which is frequently utilized for this purpose. Such peroxide carrier compositions normally containing from 30 to 55 weight percent active peroxide and typically contain from 35 to 50 weight percent active peroxide. For instance, the peroxide carrier composition can contain from 38 to 43 weight percent active peroxide, such as dicumyl peroxide, on a mineral carrier, such as calcium carbonate. The peroxide will normally be included in the solid sealant layer formulation used in the practice of this invention at a level which is within the range of 2 phr to 7 phr (based upon active peroxide) and will typically be present at a level which is within the range of 2.5 phr to 5 phr. It is preferred for the peroxide to be present at a level which is within the range of 3 phr to 4.2 phr and is more preferably included at a level which is within the range of 3.5 phr to 4 phr. The term "phr" stands for parts by weight per 100 parts by weight of rubber.

In the practice of this invention it is preferred to utilize a peroxide that has an active oxygen content (AOC) of at least 6.

Active oxygen content is determined by dividing the weight of active oxygen atoms in the compound by its total molecular weight (this is done on the basis of one active oxygen atom for each peroxide moiety (-O-O-) in the compound.

For example, t-butyl cumyl peroxide has one active oxygen atom (molecular weight of 16) and a total molecular weight of 208. Accordingly, the active oxygen content of t-butyl cumyl peroxide is 16/208 which is 0.077 or 7.7%.

In any case, peroxides having active oxygen contents of greater than 7%, 8%, 9%, or even 10% are preferred. This is because they generate less during the tire curing process than do peroxides having lower active oxygen contents. For this reason, benzoyl peroxide (AOC of 6.5), t-butyl cumyl peroxide (AOC of 7.7), and di-t-butyl peroxide (AOC of 11.0%) are preferred for use in the practice of this invention.

It should also be noted that these peroxides can also be utilized beneficially in conventional butyl rubber based sealant formulations that include typically compounding ingredients as described herein.

A reinforcing filler is included in the solid sealant layer formulation to give it a consistency which facilitates building it into uncured tires. A wide variety of reinforcing fillers can be used for this purpose. For example, the filler can be carbon black, graphite, graphene, carbon nanotubes, wollastonite, silica, crystalline silica, clay, 2:1 layered silicate clays, talc, diatomaceous earth, calcium carbonate (CaCO₃), calcium silicate, starch, lignin, alumina, or polypropylene. The 2:1 layered silicate clays that are typically preferred include montmorillonite, bentonite, hectorite, saponite, nontronite, beidellite, fluorohectorite, stevensite, volkonskoite, sauconite laponite, related analogs thereof and their physical blends. Clays that have been chemically modified to make them compatible with organic materials are preferred and are generally referred to as "organophilic" clays or "organo-clays". The basic starting material used to make organophilic clay is an exchangeable clay of the smectite group and can include montmorillonite (commonly known and mined as bentonite), hectorite, saponite, attapulgite and sepolite. These clays include exchangeable cationic species such as sodium, potassium or calcium ions on their surface and between clay galleries or layers. In the course of manufacturing an organophilic clay, at least a portion of these exchangeable cationic species are substituted by an organic cation such as a quaternary amine, an organophosphorus ion, or any other ion of the type known in the art as an onium ion.

The graphene that can be used in the solid sealant layer formulations of this invention is a one-atom-thick crystalline form of carbon in which carbon atoms are held together by sigma bonds that are arranged in a two-dimensional honeycomb lattice. More specifically graphene is a crystalline allotrope of carbon with 2-dimensional properties. The carbon atoms in graphene are densely packed in a regular atomic-scale hexagonal (chicken wire) pattern. Each atom has four bonds, one σ bond with each of its three neighbors and one Π-bond that is oriented out of plane. The distance between adjacent carbon atoms in graphene is approximately 0.142 nanometers. The graphene that can be advantageously used as a reinforcing filler in the practice of this invention can have zig-zag, armchair, K-region, gulf, bay, cove, and fjord edge topologies. Typically, at least 50 percent, 60 percent, 70 percent, or 80 percent of the carbon-carbon bonds on the edges of the graphene structure will be in the zig-zag configuration, the armchair configuration, or the bay configuration. In many cases, at least 40 percent, 50 percent, or 60 percent of the carbon-carbon bonds on the edges of the graphene structure will be in the zig-zag configuration. In one embodiment at least 40 percent, 50 percent, or 60 percent of the carbon-carbon bonds on the edges of the graphene structure will be in the armchair configuration. In another embodiment at least 40 percent, 50 percent, or 60 percent of the carbon-carbon bonds on the edges of the graphene structure will be in the bay configuration. Typically, less than 40 percent of the carbon-carbon bonds on the edges of the graphene structure will be in the cove configuration and more typically less than 30 percent of the carbon-carbon bonds on the edges of the graphene structure will be in the cove configuration. In another embodiment less than 40 percent of the carbon-carbon bonds on the edges of the graphene structure will be in the cove configuration and less than 30 percent or more typically less than 20 percent of the carbon-carbon bonds on the edges of the graphene structure will be in the fjord configuration.

The graphene that can optionally be used as a reinforcing filler in the practice of this invention is exfoliated into nano-scaled graphene plate (NGP) material that is essentially comprised of individual single sheets of graphene or a plurality of sheets of graphite planes. Each graphite plane, also referred to as a graphene plane or basal plane and is comprised of a two-dimensional hexagonal structure of carbon atoms. Each plane has a length and a width parallel to the graphite plane and a thickness orthogonal to the graphite plane characterized in that at least one of the values of length, width, and thickness is 100 nanometers (nm) or smaller. Preferably, all length, width and thickness values are smaller than 100 nm. This NGP material can be produced by a process the method described in United States Patent 7,071,258 which comprises the steps of: (a) carbonization or graphitization to produce a polymeric carbon, (b) exfoliation or expansion of graphite crystallites in the polymeric carbon to delaminate or separate graphene planes, and (c) mechanical attrition of the exfoliated structure to nanometer-scaled plates. The teachings of United States Patent 7,071,258 are incorporated herein by references for the purpose or describing graphene that can be utilized in the practice of this invention and methods for manufacturing such graphene. In the practice of this invention, it is preferred for the graphene to comprise individual single sheets of graphene (single graphene planes or single basal planes).

The filler or reinforcing filler is typically included at a level which is within the range of 10 phr to 75 phr and is more typically included at a level which is within the range of 20 phr to 50 phr. The filler or reinforcing filler is normally included at a level which is within the range of 25 phr to 45 phr, is preferably included at a level which is within the range of 30 phr to 40 phr, and is more preferably included at a level which is within the range of 32 phr to 38 phr.

Using polypropylene as a filler, lower levels are required since it has been found to be highly effective. More specifically, the use of polypropylene as a filler means that 35 percent to 40 percent less material is required than is the case with conventional fillers, such as carbon black and mineral fillers.

The use of polypropylene as a filler also offers an additional advantage in that it breaks down during the curing of the tire to work in conjunction with the polyisobutylene rubber as a sealant. In other words, polypropylene offers a unique advantage in that it acts both as a filler in building the tire and subsequently as a sealant in the cured tire. Relatively low molecular weight polypropylene is preferred for use as a filler in the practice of this invention. Such molecular weight polypropylene typically has a weight average molecular weight (M_{w}) which is within the range of 4,000 to 40,000. The relatively low molecular weight polypropylene will normally have a weight average molecular weight which is within the range of 6,000 to 25,000, will preferably have a weight average molecular weight which is within the range of 8,000 to 20,000, and will most preferably have a weight average molecular weight which is within the range of 10,000 to 15,000. It should also be noted that polypropylene can also be beneficially utilized in conventional butyl rubber based sealant formulations that include typically compounding ingredients as described herein.

The solid sealant layer formulation used in the practice of this invention can optionally include one or more processing oils. A wide variety of processing oils can be used. Suitable processing oils may include various oils as are known in the art, including aromatic, paraffinic, naphthenic, triglyceride oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. The triglyceride oils that can be used include vegetable oils, including vegetable oils, soybean oil, canola oil (Rapeseed oil), corn oil, cottonseed oil, olive oil, palm oil, safflower oil, sunflower oil, coconut oil, and peanut oil. Castor oil, soybean oil, and corn oil are preferred oils for use in the solid sealant layer formulations of this invention. Castor oil is a triglyceride oil that contains approximately 87 percent ricinoleic acid, 7 percent oleic acid, 3 percent linoleic acid, 2 percent palmitic acid, and 1 percent stearic acid. The processing oil will typically be employed at a level which is within the range of 1 phr to 20 phr and will more typically be employed at a level which is within the range of 1 phr to 10 phr. In most cases the processing oil will be included at a level which is within the range of 2 phr to 5 phr and will preferably be employed at a level which is within the range of 2 phr to 4 phr.

Various pigments or colorants can also optionally be included in the sealant formulations of this invention. By including one or more pigments or colorants in the sealant formulation the fact that the tire has in fact been punctured and the location of puncture can more readily be identified. A wide variety of colors can be used for this purpose with lights colors which stand out from the characteristic black color of tire treads being preferred. For example, white, red, orange, yellow, green, or blue pigments or colorants can optionally be included. Titanium dioxide can be utilized to impart a brilliant white color, red iron pigment can be used to impart a brilliant red color, or pigment yellow 12 can be used to impart a brilliant yellow color. The pigment or colorant will typically be utilized in a quantity that will make punctures in the tire more readily apparent and will normally be used at a level which is within the range 1 phr to 5 phr, and will preferably be used at a level which is within the range of 2 phr to 4 phr.

Both organic and inorganic pigments can be utilized. In most cases the pigment or colorant will be of a white, red, orange, yellow, green, or blue color. Some representative examples of pigments that can be utilized include, but are not limited to, Pigment Yellow 1 (CAS No. 2512-29-0), Pigment Yellow 110 (CAS No. 5590-18-1), Pigment Yellow 12 (CAS No. 15541-56-7), Pigment Yellow 126 (CAS No. 90268-23-8), Pigment Yellow 127 (CAS No. 68610-86-6), Pigment Yellow 13 (CAS No. 5102-83-0), Pigment Yellow 138 (CAS No. 30125-47-4), Pigment Yellow 14 (CAS No. 5468-75-7), Pigment Yellow 150 (CAS No. 68511-62-6), Pigment Yellow 151 (CAS No. 31837-42-0), Pigment Yellow 154 (CAS No. 68134-22-5), Pigment Yellow 168 (CAS No. 71832-85-4), Pigment Yellow 17 (CAS No. 4531-49-1), Pigment Yellow 174 (CAS No. 78952-72-4), Pigment Yellow 180 (CAS No. 77804-81-0), Pigment Yellow 183 (CAS No. 65212-77-3), Pigment Yellow 191 (CAS No. 129423-54-7), Pigment Yellow 3 (CAS No. 6486-23-3), Pigment Yellow 34 (CAS No. 1344-37-2), Pigment Yellow 42 (CAS No. 51274-00-1), Pigment Yellow 65 (CAS No. 6528-34-3), Pigment Yellow 74 (CAS No. 6358-31-2), Pigment Yellow 75 (CAS No. 52320-66-8), Pigment Yellow 81 (CAS No. 22094-93-5), Pigment Yellow 83 (CAS No. 5567-15-7), C.I. Pigment Yellow 42 (iron oxide), C.I. Pigment Yellow 34 (lead chromates), C.I. Pigment Yellow 184 (bismuth vanadates), C.I. Pigment Yellow 53 (nickel antimony), C.I. Pigment Orange 20 (cadmium sulfide), C.I. Pigment Red 101 (iron oxide), C.I. Pigment Red 104, C.I. Pigment Red 29 (ultramarine pigment), C.I. Pigment Blue 29 (ultramarine pigment), C.I. Pigment Blue 28, C.I. Pigment Blue 36, C.I. Pigment Violet 15 (ultramarine pigment), C.I. Pigment Violet 16 (manganese violet), Pigment Green 17 (chrome oxide green), C.I. Pigment Green 19 (cobalt-based mixed metal oxides), C.I. Pigment Green 26 (cobalt-based mixed metal oxides), and C.I. Pigment Green 50 (cobalt-based mixed metal oxides).

Some additional inorganic pigments that can be used include Ultramarine blue, Persian blue, Cobalt blue (CAS No. 1345-16-0), Curlean blue, Egyptian blue, Han blue (BaCuSi₄O₁₀), Azurite blue (Cu₃(CO₃)₂(OH)₂, Prussian blue (CAS No. 14038-43-8), YInMn blue (Oregon blue), Realgar red (α-As₄S₄), cadmium red (Cd₂SSe), Cerium sulfide red, Venetian red (Fe₂O₃), Red Ochre (anhydrous Fe₂O₃), Burnt sienna red, Red lead (Pb₃O₄), Vermilian red, Cinnabar red, Ultramarine violet, Han purple (BaCuSi₂O₆), Cobalt violet (CO₃(PO₄)₂), Manganese violet (NH₄MnP₂O₇), Purple of Cassius, Primrose yellow (BiVO₄), Cadmium yellow (CdS), Chrome yellow (PbCrO₄), Aureolin yellow (K₃Co(NO₂)₆), Yellow Ochre (Fe₂O₃•H₂O), Naples yellow, Titanium yellow (NiO•Sb₂O₃•20TiO₂), Zinc yellow (ZnCrO₄), and Chrome orange (PbCrO₄•PbO).

Polyethylene glycol can also optionally be included in the sealant formulations of this invention. The polyethylene glycol will typically have a molecular weight which is within the range of 500 to 12, 000 and will more typically have a molecular weight which is within the range of 4,000 to 8,000. In cases where polyethylene glycol is utilized, it will typically be included at a level which is within the range of 0.1 phr to 2 phr, preferably 0.2 phr to 1 phr, and most preferably 0.3 phr to 0.7 phr.

The various components of the solid sealant layer formulation can be mixed together using any convenient rubber mixing equipment, such as a Banbury mixer or a mill mixer. In any case, this rubber composition should have sufficient viscosity and unvulcanized adhesion (green strength) to enable its incorporation into an unvulcanized tire without departing from standard, long standing tire building techniques and without the use of complicated auxiliary tire building equipment. In the method of this invention, the polymer composition can be formed into a strip of unvulcanized rubber that is assembled into the tire.

The strip of puncture sealant formulation employed should extend from one shoulder of the tire to the other, in other words, it should cover the crown area of the tire. The thickness of the sealant layer can vary greatly in an unvulcanized puncture sealant tire. Generally, the thickness of the polymer composition layer will range from 0.2 mm to 8.5 mm. It is generally preferred for the sealant composition layer to have a thickness of 3 mm to 6 mm and is typically most preferred for the sealant layer to have a thickness which is within the range of 4 mm to 5 mm. In passenger tires it is normally most preferred for the polymer composition layer to have a thickness of 4.5 mm.

In one scenario tires can be built in accordance with this invention by first applying an innerliner to a building drum with the strip of the sealant formulation of this invention subsequently being applied to the layer of innerliner. After the strip of sealant formulation is assembled into the unvulcanized tire other normal tire components can then be assembled into the tire using standard, known procedures. In this scenario the sealant layer will be sandwiched between the innerliner and the tire carcass. In another embodiment of this invention a second layer of innerliner can be applied on top of the sealant formulation with the carcass subsequently being applied on top of the second sealant layer. In this embodiment the sealant formulation will be sandwiched between the two layers of innerliner. In other words, the sealant composition can be built into the tire so as to be sandwiched between two layers of innerliner or between a layer of innerliner and the carcass of the tire.

The following examples are included to further illustrate the method of manufacturing the self-sealing pneumatic rubber tires of this invention. These examples are intended to be representative of the present invention and are not to be regarded as limiting the scope of the invention or the manner in which it can be practiced. Unless specifically indicated otherwise, parts and percentages are given by weight.

### Comparative Example 1 and Comparative Examples 2-4

In this series of experiments sealant compositions were prepared and cured with dicumyl peroxide into test strips for evaluation. In the procedures used non-productive formulations were made first and then the dicumyl peroxide was added to make productive formulations. The composition of each of the formulations evaluated in this series of experiments is shown in Table 1 with all levels being designated in parts by weight. Comparative Example 2 which contained only butyl rubber and no polyisobutylene rubber was cured using 5.7 parts by weight of dicumyl peroxide. The formulations of Comparative Example 1 and Comparative Examples 3 and 4 included three different levels of dicumyl peroxide as shown in Table 1. The levels of the various materials delineated in Table 1 are given in parts by weight.

| Table 1 | | | | |
|---|---|---|---|---|
| | Example 1¹ | Example 2¹ | Example 3¹ | Example 4¹ |
| Polyisobutylene Rubber² | 100 | - | 50 | 75 |
| Butyl Rubber | - | 100 | 50 | 25 |
| Amorphous Silica³ | 17 | 17 | 17 | 17 |
| Kaolin Clay⁴ | 10 | 10 | 10 | 10 |
| Titanium Dioxide⁵ | 2 | 2 | 2 | 2 |
| Medium Process Oil⁶ | 3 | 3 | 3 | 3 |
| Yellow Pigment⁷ | 0.8 | 0.8 | 0.8 | 0.8 |
| Polyethylene Glycol (MW = 6.000) | 0.5 | 0.5 | 0.5 | 0.5 |
| Dicumyl Peroxide⁸ (active) | 2.0/3.8/5.7 | 5.7 | 2.0/3.8/5.7 | 2.0/3.8/5.7 |

| | | | | |
|---|---|---|---|---|
| 1 - Examples 1, 2, 3 and 4 are comparative examples. 2- Oppanol^{®} N50 polyisobutylene rubber (Mᵥ = 425,000; M_{w} = 565,000; M_{w}/Mₙ = 2.4; Tg = -64°C; and Staudinger Index Jo = 128-150 cm3/g in isooctane @ 20°C) 3 - HI-SIL 532 EP synthetic amorphous silica from PPB Industries, Inc. 4 - Polyfil HG 90 kaolin clay from Kamin 5 - Cotiox KA 100 titanium dioxide from Cosmo Chemical Company 6 - Hyprene 100 medium process oil from Ergon Refining 7 - E-6837 yellow pigment 12 in EPR (50%/50%) from Akrochem 8 - Di-Cup 40C dicumyl peroxide on precipitated calcium carbonate (40.5% active) from Arkema Inc. Note: The levels indicated in Table 1 are levels of active dicumyl peroxide. | | | | |

Table 2 shows the storage modulus of the cured samples at the three different levels of dicumyl peroxide used to cure the samples. It should be noted that in Comparative Example 2 (which used 100% butyl rubber as its only rubber component) only the sample using the highest level of dicumyl peroxide was prepared which was necessary to reduce the storage modulus to a sufficient level for utilization as a puncture sealant.

| Table 2 | | | | |
|---|---|---|---|---|
| | Example 1 | Example 2 | Example 3 | Example 4 |
| Level of dicumyl peroxide (active) | G' @ 5% (40°C) in MPa | | | |
| 2.0 phr | 1.008 | - | 0.140 | 0.140 |
| 3.8 phr | 0.040 | - | 0.060 | 0.047 |
| 5.7 phr | 0.020 | 0.066 | 0.030 | 0.022 |

As can be seen from Table 2, the storage modulus of the samples was reduced with increasing levels of peroxide. Table 2 also shows that the reduction in storage modulus attained also increased with increasing levels of polyisobutylene rubber in the formulations. Table 2 further shows that a satisfactory storage modulus of less than 0.070 can be attained in formulations that contain a high level of polyisobutylene rubber. In fact, a storage modulus of 0.040 (within the range of 0.030 to 0.050) was attained in Example 1 which was cured utilizing only 3.8 phr of dicumyl peroxide.

These puncture sealant formulations were also evaluated to determine the level of innerliner expansion that resulted. This was accomplished by curing the sealant formulations between two layers of innerliner and measuring the level of expansion that occurred on curing. Expansion was measured immediately after the samples came out of the cure press. The results of this testing are reported in Table 3. The reduction in expansion is reported as compared to the butyl rubber control (Comparative Example 1).

| Table 3 | | |
|---|---|---|
| | Expansion | Expansion Reduction |
| Comparative Example 2 | 3.2 cm | - |
| Comparative Example 1 at 2.0 peroxide level | 1.4 cm | 56.3% |
| Comparative Example 1 at 3.8 phr peroxide level | 2.2 cm | 31.3% |

As can be seen from Table 3, the use of the puncture sealant formulation results in significantly lower levels of innerliner expansion as compared to conventional puncture sealant formulations. It can accordingly be used in manufacturing pneumatic tires having better uniformity and better balance characteristics. Additionally, it can be easily built into tires using standard techniques without compromising puncture sealing capabilities.

### Comparative Example 5 and Example 6

In this experiment, a polyisobutylene rubber based sealant formulation was made in accordance with this invention using relatively low molecular weight polypropylene as a filler and was compared to a similar sealant formulation which were made utilizing conventional fillers (synthetic amorphous silica and clay). These formulations are further described in Table 3. It should be noted that the sealant formulation of Comparative Example 5 is identical to the formulation previously described in Comparative Example 1 at the 5.7 parts by weight level of dicumyl peroxide. The sealant composition of Example 6 was made so as to have the same equivalent volume fraction of polypropylene as the volume fraction of fillers in the sealant composition of Comparative Example 5. It should be noted that the levels of all of the materials delineated in Table 4 are given in parts by weight.

| Table 4 | | |
|---|---|---|
| | Comparative Example 5 | Example 6 |
| Polyisobutylene Rubber¹ | 100 | 100 |
| Low Molecular Weight PP² | - | 14.3 |
| Amorphous Silica³ | 17 | - |
| Kaolin Clay⁴ | 10 | - |
| Titanium Dioxide⁵ | 2 | - |
| Medium Process Oil⁶ | 3 | - |
| Yellow Pigment⁷ | 0.8 | - |
| Polyethylene Glycol (MW = 6.000) | 0.5 | - |
| Dicumyl Peroxide⁸ (active) | 3.8 | 3.6 |

| | | |
|---|---|---|
| 1 - Oppanol^{®} N50 polyisobutylene rubber (Mᵥ = 425,000; M_{w} = 565,000; M_{w}/Mₙ = 2.4; Tg = -64°C; and Staudinger Index Jo = 128-150 cm3/g in isooctane @ 20°C) 2 - The polypropylene (PP) had a weight average molecular weight of 12,000 3 - HI-SIL 532 EP synthetic amorphous silica from PPB Industries, Inc. 4 - Polyfil HG 90 kaolin clay from Kamin 5 - Cotiox KA 100 titanium dioxide from Cosmo Chemical Company 6 - Hyprene 100 medium process oil from Ergon Refining 7 - E-6837 yellow pigment 12 in EPR (50%/50%) from Akrochem 8 - Di-Cup 40C dicumyl peroxide on precipitated calcium carbonate (40.5% active) from Arkema Inc. Note: The levels indicated in Table 4 are levels of active dicumyl peroxide. | | |

The storage modulus G' of these sealant formulations was determined at temperatures from 40°C up to 100°C as reported in Table 5.

| Table 5 | | |
|---|---|---|
| Temperature | Comparative Example 5 (Conventional Fillers) | Example 6 (PP Filler) |
| 40°C | 0.039 MPa | 0.036 MPa |
| 50°C | 0.026 MPa | 0.021 MPa |
| 60°C | 0.018 MPa | 0.012 MPa |
| 70°C | 0.015 MPa | 0.007 MPa |
| 80°C | 0.013 MPa | 0.008 MPa |
| 90°C | 0.013 MPa | 0.008 MPa |
| 100°C | 0.012 MPa | 0.008 MPa |

As can be seen from Table 5, all of the sealant formulations made utilizing the relatively low molecular weight polypropylene exhibited a lower level of storage modulus at equivalent temperatures. At higher temperatures this difference became more pronounced. The sealant formulation made with the polypropylene also appeared to handle and process better and more easily. In cases where low molecular weight polypropylene is used as a filler it is also possible to employ a lower level of peroxide to attain the desired storage modulus. This accordingly makes it possible employ a lower level of peroxide which will further reduce the level of gas generated during curing.

### Comparative Examples 7-8 and Comparative Example 9

In this series of experiment dicumyl peroxide, benzoyl peroxide, and t-butyl cumyl peroxide were evaluated for use in butyl rubber sealant formulations. These formulations are further described in Table 6. It should be noted that dicumyl peroxide was evaluated in as a control in Comparative Example 9. The levels of benzoyl peroxide and t-butyl cumyl peroxide used in Comparative Examples 7 and 8 were adjusted as needed to attain a decrease in storage modulus which was equivalent to the reduction realized in the control. More specifically, the required quantity of peroxides was used to reduce the storage modulus of the sealant compositions to a level of approximately 0.08 MPa. In any case, the levels of the various materials delineated in Table 6 are given in parts by weight.

| Table 6 | | | |
|---|---|---|---|
| | Comparative Example 7¹ | Comparative Example 8¹ | Comparative Example 9¹ |
| Butyl Rubber | 100 | 100 | 50 |
| Amorphous Silica² | 17 | 17 | 17 |
| Kaolin Clay³ | 10 | 10 | 10 |
| Medium Process Oil⁴ | 3 | 3 | 3 |
| Polyethylene Glycol (MW = 6.000) | 0.5 | 0.5 | 0.5 |
| Dicumyl Peroxide⁵ (AOC of 5.86%) | - | - | 5.7 |
| Benzoyl peroxide (AOC of 6.5%) | 9 | - | - |
| t-butyl cumyl peroxide (AOC of 7.7%) | - | 10 | - |
| Height of Gas Bubbles | 1.4 cm | ~2 cm⁶ | 3.3 cm |

| | | | |
|---|---|---|---|
| 1 - Examples 7, 8 and 9 are comparative example. 2 - HI-SIL 532 EP synthetic amorphous silica from PPB Industries, Inc. 3 - Polyfil HG 90 kaolin clay from Kamin 4 - Hyprene 100 medium process oil from Ergon Refining 5 - Di-Cup 40C dicumyl peroxide on precipitated calcium carbonate (40.5% active) from Arkema Inc. Note: The levels indicated in Table 6 are levels of active dicumyl peroxide. 6 - The level of expansion was not measured precisely, but appeared to be 2 cm. In any case, it is far less expansion than was experiences in the case of the control. | | | |

This series of experiments shows that a smaller degree of gas generation results in cases where peroxides having high active oxygen contents are used in making the sealant formulations. Such peroxides can accordingly be beneficially utilized in making the polyisobutylene based sealant formulations of this invention as well as in making conventional butyl rubber based sealant formulations. Such butyl rubber based sealant formulations can, of course, also include additional ingredients, such as the reinforcing fillers, oils, ethylene glycol, colorants, and pigments previously described herein.

## Claims

1. A sealant composition comprising: (a) polyisobutylene, (b) a peroxide, and (c) a filler, preferably a reinforcing filler, wherein the polyisobutylene is present in the sealant composition at a level of at least 50 weight percent, based upon the total weight of elastomers in the sealant composition, **characterized in that** the filler includes polypropylene.

2. The sealant composition of claim 1 wherein the polyisobutylene is present in the sealant composition at a level of at least 75 weight percent or at least 90 weight percent, based upon the total weight of elastomers in the sealant composition.

3. The sealant composition as specified in claim 1 or 2 wherein the sealant composition is void of butyl rubber and halogenated butyl rubber.

4. The sealant composition as specified in at least one of the previous claims wherein the peroxide is present at a level which is within the range of from 1 phr to 5 phr or in the range of from 3.5 phr to 5 phr.

5. The sealant composition as specified in at least one of the preceding claims wherein the peroxide has an active oxygen content of at least 6%.

6. The sealant composition as specified in at least one of the preceding claims wherein the peroxide has an active oxygen content of at least 8% or at least 10%.

7. The sealant composition as specified in at least one of the preceding claims further comprises a red, orange, yellow, green, or blue pigment or colorant, and/or wherein the sealant composition is void of carbon black.

8. The sealant composition as specified in at least one of the preceding claims wherein the sealant composition is void of fillers or reinforcing fillers other than polypropylene and carriers for the peroxide.

9. The sealant composition as specified in claim 7 or 8 wherein the polypropylene is a polypropylene having a weight average molecular weight within the range of from 4,000 to 40,000 as determined using gel permeation chromatography according to ASTM 5296-11 using polystyrene calibration standards.

10. The sealant composition as specified in at least one of the preceding claims wherein the sealant composition is void of natural rubber, synthetic polyisoprene rubber, emulsion styrene-butadiene rubber, solution styrene-butadiene rubber, isoprene-butadiene rubber, styrene-isoprene-butadiene rubber, styrene/butadiene diblock polymers, styrene/butadiene/styrene triblock polymers, neoprene, nitrile rubber, ethylene-propylene rubbers, and ethylene-propylene-diene monomer rubbers.

11. The sealant composition as specified in at least one of the preceding claims wherein the sealant composition is solid.

12. An uncured pneumatic tire including a generally toroidal-shaped supporting carcass (4, 14) with an outer circumferential tread (8, 11) , two spaced beads (5, 15), at least one ply extending from bead to bead, sidewalls (3, 13) extending radially from and connecting said tread (8, 11) to said beads (5, 15), a sealant layer (7, 17) which is disposed radially inwardly from the supporting carcass (4 ,14), wherein the circumferential tread (8, 11) is adapted to be ground-contacting, wherein the sealant layer (7, 17) comprises the sealant composition of at least one of the claims 1 to 11, and wherein an innerliner (6, 16) which is disposed (i) radially inwardly from the sealant layer (7, 17) or (ii) radially outwardly from the sealant layer (7, 17) and between the sealant layer (7, 17) and the carcass (4, 14).

13. A method of manufacturing a pneumatic rubber tire (2, 10) having a puncture sealing feature, the method including: (1) building an unvulcanized tire (2, 10) comprising a circumferential rubber tread (8, 11), a supporting carcass (4, 14) therefor, two spaced beads (5, 15), two rubber sidewalls (3, 13) connecting said beads (5, 15), an inner liner (6, 16), and a solid sealant formulation layer (7, 17) either disposed radially inwardly from the supporting carcass (4, 14) and radially outwardly from the inner liner (6) or disposed radially inwardly from the inner liner (6), and (2) shaping and vulcanizing said unvulcanized tire (2, 10) in a tire mold under conditions of heat and pressure and simultaneously forming in situ a puncture sealant layer (7, 17) in said tire (2, 10) by both crosslinking and partially depolymerizing polyisoprene rubber in the sealant formulation layer (7, 17), wherein the sealant layer comprises the sealant composition of at least one of the claims 1 to 11.

## Patentansprüche

1. Dichtungszusammensetzung, die Folgendes umfasst: (a) Polyisobutylen; (b) ein Peroxid; und (c) einen Füllstoff, vorzugsweise einen verstärkenden Füllstoff; wobei das Polyisobutylen in der Dichtungszusammensetzung in einer Menge vorliegt, die mindestens 50 Gewichtsprozent, bezogen auf das Gesamtgewicht der Elastomere in der Dichtungszusammensetzung, darstellt; **dadurch gekennzeichnet, dass** der Füllstoff Polypropylen enthält.

2. Dichtungszusammensetzung nach Anspruch 1, wobei das Polyisobutylen in der Dichtungszusammensetzung in einer Menge vorliegt, die mindestens 75 Gewichtsprozent oder mindestens 90 Gewichtsprozent, bezogen auf das Gesamtgewicht der Elastomere in der Dichtungszusammensetzung, darstellt.

3. Dichtungszusammensetzung, wie in Anspruch 1 oder 2 angegeben, wobei die Dichtungszusammensetzung frei von Butylkautschuk und halogeniertem Butylkautschuk ist.

4. Dichtungszusammensetzung, wie in mindestens einem der vorstehenden Ansprüche angegeben, wobei das Peroxid in einer Menge vorliegt, die in dem Bereich von 1 ThK bis 5 ThK oder in dem Bereich von 3,5 ThK bis 5 ThK liegt.

5. Dichtungszusammensetzung, wie in mindestens einem der vorstehenden Ansprüche angegeben, wobei das Peroxid einen Gehalt an aktivem Sauerstoff von mindestens 6 % aufweist.

6. Dichtungszusammensetzung, wie in mindestens einem der vorstehenden Ansprüche angegeben, wobei das Peroxid einen Gehalt an aktivem Sauerstoff von mindestens 8 % oder von mindestens 10 % aufweist.

7. Dichtungszusammensetzung, wie in mindestens einem der vorstehenden Ansprüche angegeben, die ferner einen roten, orangefarbenen, gelben, grünen oder blauen Farbstoff oder ein Pigment der oben genannten Farben umfasst; und/oder wobei die Dichtungszusammensetzung frei von Ruß ist.

8. Dichtungszusammensetzung, wie in mindestens einem der vorstehenden Ansprüche angegeben, wobei die Dichtungszusammensetzung frei von Füllstoffen oder verstärkenden Füllstoffen ist, mit Ausnahme von Polypropylen und Trägern für das Peroxid.

9. Dichtungszusammensetzung, wie in Anspruch 7 oder 8 angegeben, wobei das Polypropylen ein Polypropylen ist, das ein gewichtsmittleres Molekulargewicht in dem Bereich von 4.000 bis 40.000 aufweist, bestimmt wie in der Norm ASTM 5296-11 beschrieben durch Gelpermeationschromatographie unter Verwendung von Kalibrierstandards auf Polystyrol-Basis.

10. Dichtungszusammensetzung, wie in mindestens einem der vorstehenden Ansprüche angegeben, wobei die Dichtungszusammensetzung frei von Naturkautschuk, synthetischem Polyisopren-Kautschuk, emulsionspolymerisiertem Styrol-Butadien-Kautschuk, lösungspolymerisiertem Styrol-Butadien-Kautschuk, Isopren-Butadien-Kautschuk, Styrol-Isopren-Butadien-Kautschuk, Styrol/Butadien-Disekvenzpolymeren, Styrol/Butadien/Styrol-Trisekvenzpolymeren, Neopren, Nitrilkautschuk, Ethylen-Propylen-Kautschuken und Ethylen-Propylen-Dien-Monomerkautschuken ist.

11. Dichtungszusammensetzung, wie in mindestens einem der vorstehenden Ansprüche angegeben, wobei die Dichtungszusammensetzung fest ist.

12. Unvulkanisierter Luftreifen, der eine tragende Karkasse (4, 14) in Form eines im Wesentlichen toroidalen Profils enthält, die eine äußere, umlaufende Lauffläche (8, 11), zwei voneinander beabstandeten Wülste (5, 15) sowie mindestens eine Lage umfasst, die sich von einem Wulst zum anderen erstreckt, Seitenwände (3, 13), die sich in der radialen Richtung erstrecken und die Lauffläche (8, 11) mit den Wülsten (5, 15) verbinden, eine Dichtungsschicht (7, 17), die in der radialen Richtung innerhalb der tragenden Karkasse (4, 14) angebracht ist; wobei die umlaufende Lauffläche (8, 11) derart ausgelegt ist, dass sie mit dem Boden in Kontakt kommt; wobei die Dichtungsschicht (7, 17) die Dichtungszusammensetzung nach mindestens einem der Ansprüche 1 bis 11 umfasst; und wobei eine Innenschicht (6, 16) (i) in der radialen Richtung innerhalb der Dichtungsschicht (7, 17) oder (ii) in der radialen Richtung außerhalb der Dichtungsschicht (7, 17) und zwischen der Dichtungsschicht (7, 17) und der tragenden Karkasse (4, 14) angebracht ist.

13. Verfahren zur Herstellung eines Luftreifens aus Kautschuk (2, 10), der eine Selbstverschlussfunktion aufweist; wobei das Verfahren Folgendes umfasst: (1) das Herstellen eines unvulkanisierten Reifens (2, 10), der eine äußere, umlaufende Lauffläche (8, 11), eine tragende Karkasse (4, 14) für diese, zwei voneinander beabstandete Wülste (5, 15), zwei Seitenwände aus Kautschuk (3, 13), die die Wülste (5, 15) verbinden, eine Innenschicht (6, 16) und eine feste Dichtungs-Formulierungsschicht (7, 17), die entweder in der radialen Richtung innerhalb der tragenden Karkasse (4, 14) angebracht ist und in der radialen Richtung außerhalb der Innenschicht (6) oder in der radialen Richtung innerhalb der Innenschicht (6) angebracht ist; und (2) das Bilden und Vulkanisieren des unvulkanisierten Reifens (2, 10) in einer Reifenform unter Wärme- und Druckbedingungen und dabei gleichzeitig das Bilden in situ in dem oben genannten Reifen (2, 10) einer Schicht (7, 17), die eine Selbstabdichtungsfunktion aufweist, durch sowohl das Durchführen eines Vernetzens als auch einer partiellen Depolymerisieren des Polyisopren-Kautschuks in der Schicht, die eine Dichtungsformulierung (7, 17) aufweist; wobei die Dichtungsschicht die Dichtungszusammensetzung nach mindestens einem der Ansprüche 1 bis 11 umfasst.

## Revendications

1. Composition d'étanchéité qui comprend : (a) du polyisobutylène ; (b) un peroxyde ; et (c) une matière de charge, de préférence une matière de charge de renforcement ; dans laquelle le polyisobutylène est présent dans la composition d'étanchéité à un niveau qui représente au moins 50 pour cent en poids, lorsqu'on se base sur le poids total des élastomères dans la composition d'étanchéité ; **caractérisée en ce que** la matière de charge englobe du polypropylène.

2. Composition d'étanchéité selon la revendication 1, dans laquelle le polyisobutylène est présent dans la composition d'étanchéité à un niveau qui représente au moins 75 pour cent en poids ou au moins 90 pour cent en poids, lorsqu'on se base sur le poids total des élastomères dans la composition d'étanchéité.

3. Composition d'étanchéité telle que spécifiée dans la revendication 1 ou 2, dans laquelle la composition d'étanchéité est exempte de caoutchouc butyle et d'un caoutchouc butyle halogéné.

4. Composition d'étanchéité telle que spécifiée dans au moins une des revendications précédentes, dans laquelle le peroxyde est présent à un niveau qui se situe dans la plage allant de 1 phr à 5 phr ou dans la plage allant de 3,5 phr à 5 phr.

5. Composition d'étanchéité telle que spécifiée dans au moins une des revendications précédentes, dans laquelle le peroxyde possède une teneur en oxygène actif qui s'élève à au moins 6 %.

6. Composition d'étanchéité telle que spécifiée dans au moins une des revendications précédentes, dans laquelle le peroxyde possède une teneur en oxygène actif qui s'élève à au moins 8 % ou à au moins 10 %.

7. Composition d'étanchéité telle que spécifiée dans au moins une des revendications précédentes, qui comprend en outre un colorant ou un pigment rouge, orange, jaune, vert ou bleu ; et/ou dans laquelle la composition d'étanchéité est exempte de noir de carbone.

8. Composition d'étanchéité telle que spécifiée dans au moins une des revendications précédentes, dans laquelle la composition d'étanchéité est exempte de matières de charge ou de matières de charge de renforcement autres que le polypropylène et des supports pour le peroxyde.

9. Composition d'étanchéité telle que spécifiée dans la revendication 7 ou 8, dans laquelle le polypropylène est un polypropylène qui possède un poids moléculaire moyen en poids qui se situe dans la plage allant de 4.000 à 40.000, tel qu'on le détermine en faisant appel à une chromatographie par perméation sur gel en conformité avec la norme ASTM 5296-11 en utilisant des normes d'étalonnage à base de polystyrène.

10. Composition d'étanchéité telle que spécifiée dans au moins une des revendications précédentes, dans laquelle la composition d'étanchéité est exempte de caoutchouc naturel, de caoutchouc de polyisoprène synthétique, de caoutchouc de styrène-butadiène polymérisé en émulsion, de caoutchouc de styrène-butadiène polymérisé en solution, de caoutchouc d'isoprène-butadiène, de caoutchouc de styrène-isoprène-butadiène, de polymères diséquencés de styrène/butadiène, de polymères triséquencés de styrène/butadiène/styrène, de néoprène, de caoutchouc nitrile, de caoutchoucs d'éthylène-propylène et de caoutchoucs monomères d'éthylène-propylène-diène.

11. Composition d'étanchéité telle que spécifiée dans au moins une des revendications précédentes, dans laquelle la composition d'étanchéité est solide.

12. Bandage pneumatique non vulcanisé qui englobe une carcasse de support (4, 14) possédant une configuration de forme généralement toroïdale, qui comprend une bande de roulement circonférentielle externe (8, 11), deux talons espacés (5, 15), au moins une nappe qu'un s'étend d'un talon à l'autre, des flancs (3, 13) qui s'étendent dans la direction radiale et qui relient ladite bande de roulement (8, 11) auxdits talons (5, 15), une couche d'étanchéité (7, 17) qui est disposée, dans la direction radiale, à l'intérieur de la carcasse de support (4, 14) ; dans lequel la bande de roulement circonférentielle externe (8, 11) est conçue pour entrer en contact avec le sol ; dans lequel la couche d'étanchéité (7, 17) comprend la composition d'étanchéité selon au moins une des revendications 1 à 11 ; et dans lequel un calandrage intérieur (6, 16) est disposé (i) dans la direction radiale, à l'intérieur de la couche d'étanchéité (7, 17) ; ou dans la direction radiale, à l'extérieur de la couche d'étanchéité (7, 17) et entre la couche d'étanchéité (7, 17) et la carcasse (4, 14).

13. Procédé de confection d'un bandage pneumatique en caoutchouc (2, 10) qui possède une fonction d'auto-obturation ; dans lequel le procédé comprend le fait de : (1) confectionner un bandage non vulcanisé (2, 10) qui comprend une bande de roulement circonférentielle externe (8, 11), une carcasse de support (4, 14) pour cette dernière, deux talons espacés (5, 15), deux flancs en caoutchouc (3, 13) qui relient lesdits talons (5, 15), un calandrage intérieur (6, 16) et une couche de formulation d'étanchéité solide (7, 17) qui est soit disposée dans la direction radiale, à l'intérieur de la carcasse de support 4, 14) et dans la direction radiale, à l'extérieur du calandrage intérieur (6), soit disposée dans la direction radiale, à l'intérieur du calandrage intérieur (6) ; et (2) configurer et vulcaniser ledit bandage non vulcanisé (2, 10) dans un moule pour bandages dans des conditions de chaleur et de pression, et de manière simultanée former in situ une couche qui possède une fonction d'auto-obturation (7, 17) dans ledit bandage (2, 10), à la fois en procédant à une réticulation et à une dépolymérisation partielle du caoutchouc de polyisoprène dans la couche qui possède une formulation d'étanchéité (7, 17) ; dans lequel la couche d'étanchéité comprend la composition d'étanchéité en conformité avec au moins une des revendications 1 à 11.
